(19) Europäisches Patentamt
European Patent Office
Office européen des brevets

(11) **EP 4 387 306 A1**

(12) **EUROPEAN PATENT APPLICATION**
published in accordance with Art. 153(4) EPC

(43) Date of publication:
**19.06.2024 Bulletin 2024/25**

(51) International Patent Classification (IPC):
*H04W 16/28* (2009.01)

(21) Application number: **22863082.8**

(52) Cooperative Patent Classification (CPC):
**H04B 7/0452; H04W 16/28; H04W 24/08; H04W 24/10**

(22) Date of filing: **12.08.2022**

(86) International application number:
**PCT/CN2022/111997**

(87) International publication number:
**WO 2023/029942 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111012315**

(71) Applicant: **Huawei Technologies Co., Ltd.
Shenzhen, Guangdong 518129 (CN)**

(72) Inventors:
• **GENG, Changqing**
  **Shenzhen, Guangdong 518129 (CN)**
• **QIAN, Fengyong**
  **Shenzhen, Guangdong 518129 (CN)**
• **ZHANG, Han**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **METHOD AND APPARATUS FOR MEASURING INTERFERENCE**

(57)    This application provides an interference measurement method and an apparatus. The interference measurement method includes: A network device sends first indication information to a terminal device. The first indication information indicates the terminal device to measure signal quality of a first signal. The network device sends the first signal to the terminal device by using N analog beams. N is an integer greater than or equal to 1, and the analog beam meets a first preset condition. The network device receives a measurement result from the terminal device. The measurement result is the signal quality of the first signal. According to the interference measurement method and the apparatus provided in this application, measurement overheads can be reduced.

FIG. 3

## Description

This application claims priority to Chinese Patent Application No. 202111012315.4, filed with the China National Intellectual Property Administration on August 31, 2021 and entitled " INTERFERENCE MEASUREMENT METHOD AND APPARATUS ", which is incorporated herein by reference in its entirety.

## TECHNICAL FIELD

This application relates to the communication field, and in particular, to an interference measurement method and an apparatus in the communication field.

## BACKGROUND

In recent years, a multi-user multiple-input multiple-output (multi-user multiple-input multiple-output, MU-MIMO) technology gradually becomes a research focus. The MU-MIMO technology allows a plurality of users to simultaneously communicate with a base station by sharing a time-frequency resource without increasing a cost of a terminal device. In an actual communication system, a quantity of users having a communication requirement is usually greater than a quantity of users that can be admitted by the system, and there is specific interference between the users. Therefore, user pairing is an important way to ensure that the MU-MIMO technology achieves multi-user diversity gains and multiplexing gains.

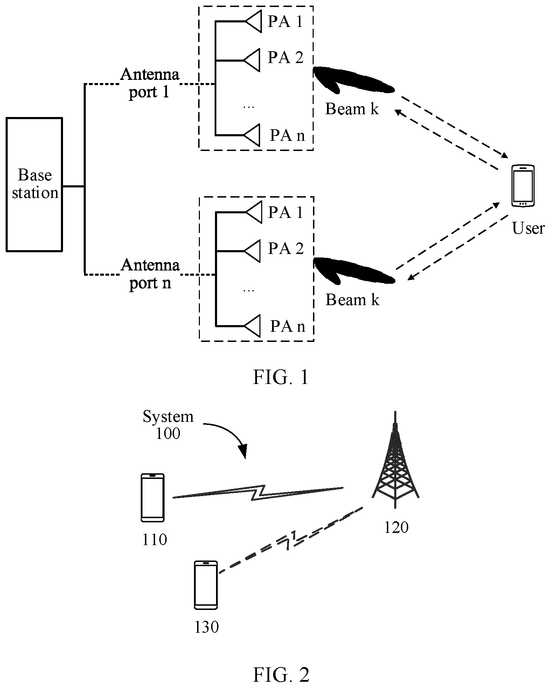

In a hybrid beamforming (hybrid beamforming, HBF) architecture, a millimeter-wave base station generates an analog beam by changing a phase shifter, and communicates with the plurality of users by using the analog beam. When communicating with the plurality of users, the millimeter-wave base station may use the MU-MIMO technology, and pair the plurality of users. Before pairing, the millimeter-wave base station needs to measure interference between different users using the analog beam for communication. A current interference calculation formula for a digital beam is $\|H_A W_B\|^2$, where $H_A$ is a spatial channel of a user A, and $W_B$ is a transmit weight of a user B. As shown in FIG. 1, when the base station receives a signal by using the analog beam, signals received by each antenna are collected after being received by a power amplifier (power amplifier, PA). Therefore, an array-level channel on each PA cannot be identified, that is, a parameter $H_A$ in the foregoing formula cannot be completely determined. Therefore, when the plurality of users are paired by using the MU-MIMO technology, the interference between different users using the analog beam for the communication cannot be calculated by using the interference calculation formula for the digital beam. How to obtain, when the MU-MIMO technology is used, interference between the paired users using the analog beam for communication is an urgent problem to be resolved currently.

## SUMMARY

This application provides an interference measurement method and an apparatus, to reduce measurement overheads.

According to a first aspect, an interference measurement method is provided. The method may be performed by a network device, or may be performed by a component (such as a chip or a chip system) configured in the network device. This is not limited in this application. The method includes: The network device sends first indication information to a terminal device. The first indication information indicates the terminal device to measure signal quality of a first signal. The network device sends the first signal to the terminal device by using N analog beams. N is an integer greater than or equal to 1, and the analog beam meets a first preset condition. The network device receives a measurement result from the terminal device. The measurement result is the signal quality of the first signal.

Based on the foregoing solution, the network device selects an analog beam that meets a preset condition to send the first signal, so that the network device does not calculate interference between all analog beams on a network device side when calculating the interference, to reduce measurement overheads.

With reference to the first aspect, in some implementations of the first aspect, the terminal device meets a second preset condition, and the second preset condition includes at least one of the following: a scheduling data amount of the terminal device is greater than or equal to a first threshold; and signal quality for communication between the terminal device and the network device is greater than or equal to a second threshold.

Based on the foregoing solution, the network device determines, by using the scheduling data amount of the terminal device, and/or the signal quality for the communication with the network device, a terminal device that participates in measurement. This avoids a case in which all terminal devices within a coverage area of the network device participate in the measurement, and can further reduce measurement overheads.

With reference to the first aspect, in some implementations of the first aspect, that the analog beam meets a first preset condition includes at least one of the following: signal quality of a signal transmitted by using the analog beam is greater than or equal to a third threshold; and the analog beam is a serving beam that is of the terminal device and that meets the second preset condition. With reference to the first aspect, in some implementations of the first aspect, the network device determines the terminal device and/or a to-be-measured analog beam set. The N analog beams belong to the to-be-measured analog beam set.

Based on the foregoing solution, before measuring interference, the network device determines the terminal device that participates in the measurement and the to-be-measured analog beam set, and sends the first signal to the determined terminal device by using the analog beam in the to-be-measured analog beam set until measurement of all analog beams in the to-be-measured analog beam set is completed. Then, the network device may calculate interference between analog beams for user pairing.

With reference to the first aspect, in some implementations of the first aspect, the network device repeatedly sends the first signal to the terminal device on a plurality of symbols by using the N analog beams. The plurality of symbols include a first symbol and a second symbol. The first symbol includes an extended cyclic prefix of the second symbol. The first symbol and the second symbol are adjacent.

With reference to the first aspect, in some implementations of the first aspect, the network device repeatedly sends the first signal to the terminal device on the plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

With reference to the first aspect, in some implementations of the first aspect, the network device sends second indication information to the terminal device. The second indication information indicates the terminal device to measure the signal quality of the first signal carried on the second symbol or the fourth symbol.

Based on the foregoing solution, the network device repeatedly sends the first signal by using two symbols, and indicates the terminal device to measure the signal quality of the first signal carried on a later symbol. This can avoid inaccurate measurement caused because the first signal is not completely received when timing advance is greater than a cyclic prefix. The network device repeatedly sends the first signal by using three symbols, and indicates the terminal device to measure the signal quality of the first signal carried on an intermediate symbol. This can avoid the inaccurate measurement caused because the first signal is not completely received when the timing advance is greater than the cyclic prefix, or when the timing advance is smaller (where a blank occurs at an end of the intermediate symbol).

With reference to the first aspect, in some implementations of the first aspect, the measurement result includes reference signal received power.

Based on the foregoing solution, the network device triggers the terminal device to measure reference signal received power of the first signal (for example, CSI), so that the network device calculates interference between analog beams after receiving the measurement result. Compared with a current solution in which the terminal device measures and calculates the interference, this solution does not completely depend on a capability of calculating the interference by the terminal device, and can be compatible with the terminal device in Release 15.

According to a second aspect, an interference measurement method is provided. The method may be performed by a terminal device, or may be performed by a component (such as a chip or a chip system) configured in the terminal device. This is not limited in this application. The method includes: The terminal device receives first indication information from a network device. The first indication information indicates the terminal device to measure signal quality of a first signal. The terminal device receives the first signal sent by the network device by using N analog beams. N is an integer greater than or equal to 1, and the analog beam meets a first preset condition. The terminal device sends a measurement result to the network device. The measurement result is the signal quality of the first signal.

Based on the foregoing solution, the network device selects an analog beam that meets a preset condition to send the first signal, so that the terminal device does not need to measure first signals sent by using all analog beams on a network device side during measurement, to reduce measurement overheads.

With reference to the second aspect, in some implementations of the second aspect, the terminal device meets a second preset condition, and the second preset condition includes at least one of the following: a scheduling data amount of the terminal device is greater than or equal to a first threshold; and signal quality for communication between the terminal device and the network device is greater than or equal to a second threshold.

Based on the foregoing solution, the terminal device participates in measurement only when the scheduling data amount of the terminal device and/or the signal quality for the communication with the network device meet the second preset condition. This avoids a case in which all terminal devices within a coverage area of the network device participate in the measurement, and can further reduce measurement overheads.

With reference to the second aspect, in some implementations of the second aspect, that the analog beam meets a first preset condition includes at least one of the following: signal quality of a signal transmitted by using the analog beam is greater than or equal to a third threshold; and the analog beam is a serving beam that is of the terminal device and that meets the second preset condition. With reference to the second aspect, in some implementations of the second aspect, the terminal device receives the first signal repeatedly sent by the network device on a plurality of symbols by using the N analog beams. The plurality of symbols include a first symbol and a second symbol. The first symbol includes an extended cyclic prefix of the second symbol. The first symbol and the second symbol are adjacent.

With reference to the second aspect, in some implementations of the second aspect, the terminal device receives the first signal repeatedly sent by the network device on a plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

With reference to the second aspect, in some implementations of the second aspect, the terminal device receives second indication information from the network device. The second indication information indicates the terminal device to measure the signal quality of the first signal carried on the second symbol or the fourth symbol.

Based on the foregoing solution, the terminal device receives the first signal by using two symbols, and measures the signal quality of the first signal carried on a later symbol. This can avoid inaccurate measurement caused because the first signal is not completely received when timing advance is greater than a cyclic prefix. The terminal device receives the first signal by using three symbols, and measures the signal quality of the first signal carried on an intermediate symbol. This can avoid the inaccurate measurement caused because the first signal is not completely received when the timing advance is greater than the cyclic prefix, or when the timing advance is smaller (where a blank occurs at an end of the intermediate symbol).

With reference to the second aspect, in some implementations of the second aspect, the measurement result includes reference signal received power.

Based on the foregoing solution, the terminal device reports reference signal received power of the first signal (for example, CSI), and does not participate in interference calculation. Compared with a current solution in which the terminal device measures and calculates the interference, this solution does not completely depend on a capability of calculating the interference by the terminal device, and can be compatible with the terminal device in Release 15.

According to a third aspect, an interference measurement apparatus is provided. The apparatus may be a network device, or a large device including the network device, or may be a component (such as a chip or a chip system) configured in the network device. This is not limited in this application. The apparatus includes a transceiver unit. The transceiver unit is configured to send first indication information to a terminal device. The first indication information indicates the terminal device to measure signal quality of a first signal. The transceiver unit is further configured to send the first signal to the terminal device by using N analog beams. N is an integer greater than or equal to 1, and the analog beam meets a first preset condition. The transceiver unit is further configured to receive a measurement result from the terminal device. The measurement result is the signal quality of the first signal.

Based on the foregoing solution, the network device selects an analog beam that meets a preset condition to send the first signal, so that the network device does not calculate interference between all analog beams on a network device side when calculating the interference, to reduce measurement overheads.

With reference to the third aspect, in some implementations of the third aspect, the terminal device meets a second preset condition, and the second preset condition includes at least one of the following: a scheduling data amount of the terminal device is greater than or equal to a first threshold; and signal quality for communication between the terminal device and the network device is greater than or equal to a second threshold.

With reference to the third aspect, in some implementations of the third aspect, that the analog beam meets a first preset condition includes at least one of the following: signal quality of a signal transmitted by using the analog beam is greater than or equal to a third threshold; and the analog beam is a serving beam that is of the terminal device and that meets the second preset condition. With reference to the third aspect, in some implementations of the third aspect, the apparatus further includes a processing unit. The processing unit is configured to determine the terminal device and/or a to-be-measured analog beam set. The N analog beams belong to the to-be-measured analog beam set.

With reference to the third aspect, in some implementations of the third aspect, the transceiver unit is specifically configured to repeatedly send the first signal to the terminal device on a plurality of symbols by using the N analog beams. The plurality of symbols include a first symbol and a second symbol. The first symbol includes an extended cyclic prefix of the second symbol. The first symbol and the second symbol are adjacent.

With reference to the third aspect, in some implementations of the third aspect, the transceiver unit is specifically configured to repeatedly send the first signal to the terminal device on the plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

With reference to the third aspect, in some implementations of the third aspect, the transceiver unit is further configured to send second indication information to the terminal device. The second indication information indicates the terminal device to measure the signal quality of the first signal carried on the second symbol or the fourth symbol.

With reference to the third aspect, in some implementations of the third aspect, the measurement result includes reference signal received power.

According to a fourth aspect, an interference measurement apparatus is provided. The apparatus may be a terminal device, or a large device including the terminal device, or may be a component (such as a chip or a chip system) configured in the terminal device. This is not limited in this application. The apparatus includes a transceiver unit. The transceiver unit is configured to receive first indication information from a network device. The first indication information indicates the terminal device to measure signal quality of a first signal. The transceiver unit is further configured to receive the first signal sent by the network device by using N analog beams. N is an integer greater than or equal to 1, and the analog beam meets a first preset condition. The transceiver unit is further configured to send a measurement result to the network device. The measurement result is the signal quality of the first signal.

Based on the foregoing solution, the network device selects an analog beam that meets a preset condition to send the first signal, so that the terminal device does not need to measure first signals sent by using all analog beams on a network device side during measurement, to reduce measurement overheads.

With reference to the fourth aspect, in some implementations of the fourth aspect, the apparatus meets a second preset condition, and the second preset condition includes at least one of the following: a scheduling data amount of the apparatus is greater than or equal to a first threshold; and signal quality for communication between the apparatus and the network device is greater than or equal to a second threshold.

With reference to the fourth aspect, in some implementations of the fourth aspect, that the analog beam meets a first preset condition includes at least one of the following: signal quality of a signal transmitted by using the analog beam is greater than or equal to a third threshold; and the analog beam is a serving beam that is of the terminal device and that meets the second preset condition.

With reference to the fourth aspect, in some implementations of the fourth aspect, the transceiver unit is further configured to receive the first signal repeatedly sent by the network device on a plurality of symbols by using the N analog beams. The plurality of symbols include a first symbol and a second symbol. The first symbol includes an extended cyclic prefix of the second symbol. The first symbol and the second symbol are adjacent.

With reference to the fourth aspect, in some implementations of the fourth aspect, the transceiver unit is further configured to receive the first signal repeatedly sent by the network device on a plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent. With reference to the fourth aspect, in some implementations of the fourth aspect, the transceiver unit is further configured to receive second indication information from the network device. The second indication information indicates the terminal device to measure the signal quality of the first signal carried on the second symbol or the fourth symbol.

With reference to the fourth aspect, in some implementations of the fourth aspect, the measurement result includes reference signal received power.

According to a fifth aspect, a communication apparatus is provided. The apparatus includes a processor, where the processor is coupled to a memory, and may be configured to perform instructions in the memory, to implement the method in any one of the first aspect or the possible implementations of the first aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in a network device. When the apparatus is the chip configured in the network device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus is provided. The apparatus includes a processor, where the processor is coupled to a memory, and may be configured to perform instructions in the memory, to implement the method in any one of the second aspect or the possible implementations of the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in the terminal device. When the apparatus is the chip configured in the terminal device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (where the computer program may also be referred to as code or instructions). When the computer program is run on a computer, the computer is enabled to perform the method in any one of the first aspect to the second aspect and any one of the possible implementations of the first aspect to the second aspect.

According to an eighth aspect, a computer-readable storage medium is provided. The computer-readable storage medium stores a computer program (where the computer program may also be referred to as code or instructions). When the computer program is run on a computer, the computer is enabled to perform the method in any one of the first aspect to the second aspect and any one of the possible implementations of the first aspect to the second aspect.

According to a ninth aspect, a communication system is provided. The communication system includes the foregoing network device and the foregoing terminal device.

**BRIEF DESCRIPTION OF DRAWINGS**

FIG. 1 is a schematic diagram of generating, by a base station by using an antenna port, an analog beam to communicate with a user;

FIG. 2 is a schematic diagram of a communication system 100 applicable to an embodiment of this application;

plication;

FIG. 3 is an interaction flowchart of an interference measurement method according to an embodiment of this application;

FIG. 4 is a schematic diagram of a symbol that carries a first signal according to an embodiment of this application;

FIG. 5 is a schematic diagram of another symbol that carries a first signal according to an embodiment of this application;

FIG. 6 is a schematic block diagram of a communication apparatus according to an embodiment of this application;

FIG. 7 is a schematic block diagram of another communication apparatus according to an embodiment of this application;

FIG. 8 is a schematic structural diagram of a communication apparatus according to an embodiment of this application; and

FIG. 9 is a schematic structural diagram of another communication apparatus according to an embodiment of this application.

**DESCRIPTION OF EMBODIMENTS**

The following describes technical solutions of this application with reference to accompanying drawings.

FIG. 2 is a schematic diagram of a communication system 100 applicable to an embodiment of this application.

As shown in FIG. 2, the communication system 100 may include at least one network device, for example, a network device 120 shown in FIG. 2. The communication system 100 may further include at least one terminal device, for example, a terminal device 110 and a terminal device 130 shown in FIG. 2. A connection may be established between the terminal device and the network device, or between terminal devices for communication. A sending device may indicate scheduling information of data by using control information, to enable a receiving device to correctly receive the data based on the control information.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or a future evolved communication system, vehicle-to-X (vehicle-to-X V2X), where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (long term evolution-vehicle, LTE-V), an internet of vehicles, machine type communication (machine type communication, MTC), an Internet of things (Internet of things, IoT), a long term evolution-machine (long term evolution-machine, LTE-M), machine to machine (machine to machine, M2M), device to device (device to device, D2D), and the like.

The terminal device in embodiments of this application may also be referred to as user equipment, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that can be directly worn or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with another device such as smartphones, such as various smart bands or smart jewelry for monitoring physical symptoms.

In addition, the terminal device may be a terminal device in an internet of things (internet of things, IoT) system. IoT is an important part of future information technology development. A main technical feature of IoT is to connect things to a network by using a communications technology, to implement an intelligent network in which man and a machine are connected and things are connected. A specific form of the terminal device is not limited in this application.

It should be understood that in embodiments of this application, the terminal device may be an apparatus configured to implement a function of the terminal device, or may be an apparatus that can support the terminal device in implementing the function, for example, a chip system. The apparatus may be installed in the terminal device. In embodiments of this application, the chip system may include a chip, or may include a chip and another discrete component. The terminal device in embodiments of this application supports measuring a signal sent by the network device by using an analog beam.

The network device in this embodiment of this application may be any device with a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, a Home evolved NodeB, or a Home NodeB, HNB), a base band unit (Base Band Unit, BBU), an access point (Access Point, AP) in a wireless fidelity (Wireless Fidelity, Wi-Fi) system, a wireless relay node, a wireless backhaul node, a transmission point (transmission point, TP), or a transmission reception point (transmission reception point, TRP), or may be a 5G, for example, gNB or a transmission point (a TRP or a TP) in an NR system, or one antenna panel or a group of antenna panels (including a plurality of antenna panels) of a base station in the 5G system, or may be a network node, for example, a baseband unit (BBU) or a distributed unit (distributed unit, DU), that forms a gNB or a transmission point.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that in embodiments of this application, the network device may be an apparatus configured to implement a function of the network device, or may be an apparatus that can support the network device in implementing the function, for example, a chip system. The apparatus may be installed in the network device. The network device in embodiments of this application may be a network device in an HBF architecture, can generate an analog beam, and communicates with the terminal device by using the analog beam.

In a scenario in FIG. 2, when the network device communicates with a plurality of users by using an MU-MIMO technology and the analog beam, before the users are paired, because the network device cannot obtain an array-level channel, interference between different users using the analog beam for communication cannot be calculated by using an interference calculation formula for the digital beam.

In a possible implementation, the terminal device periodically scans a downlink signal sent by the network device by using the analog beam, measures reference signal received power (reference signal received power, RSRP) of the downlink signal, selects analog beams corresponding to four downlink signals having highest RSRP, and reports the analog beams to the network device.

For example, the downlink signal may be channel state information (channel state information, CSI).

In this implementation, the terminal device reports four analog beams, and the network device can obtain interference information between the four analog beams. A quantity of analog beams on a network device side is far greater than 4, that is, the quantity of analog beams used by the network device to communicate with the terminal device is far greater than 4.

Therefore, in this implementation, before pairing the users by using the MU-MIMO technology, the network device cannot obtain interference information of an analog beam other than the four analog beams. It should be understood that, the interference information that cannot be obtained may be interference information between the four analog beams and another analog beam, may alternatively be interference information between other analog beams.

In another possible implementation, the network device binds one pair of analog beams, for example, binds an analog beam #1 and an analog beam #2. If the network device communicates with the terminal device by using the analog beam #1, and communication quality is greater than or equal to (greater than) a threshold, the analog beam #1 may be referred to as a serving analog beam. If the network device communicates with the terminal device by using the analog beam #2, and communication quality is less than (less than or equal to) a threshold, the analog beam #2 may be referred to as an interfering analog beam.

The network device simultaneously sends the downlink signal to the terminal device by using the serving beam and the analog beam. The terminal device receives the downlink signal, and measures a signal to interference plus noise ratio (signal to interference plus noise ratio, SINR) of the downlink signal. Subsequently, the terminal device reports the measured SINR to the network device, and the network device may learn of interference information of the serving beam and the analog beam.

For example, the downlink signal may be the CSI.

In this implementation, only a combination of one pair of analog beams can be measured once. However, there are a large quantity of analog beams on the network device side. Therefore, the network device needs to combine and measure the analog beams for a plurality of times to obtain the interference information of the analog beam, causing high overheads.

For example, there are eight analog beams on the network device side. When there are four terminal devices performing pairing, any four of the eight analog beams need to be selected for combination and measurement. In a combination process, there are $C_8^4$ choices. It can be learned that a quantity of measurement times increases in multiples, causing high measurement overheads. In addition, in this implementation, all terminal devices within a coverage area of the network device need to participate in interference measurement. This imposes high requirements on terminal device compatibility. For example, a terminal device in Release 15 does not support the measurement.

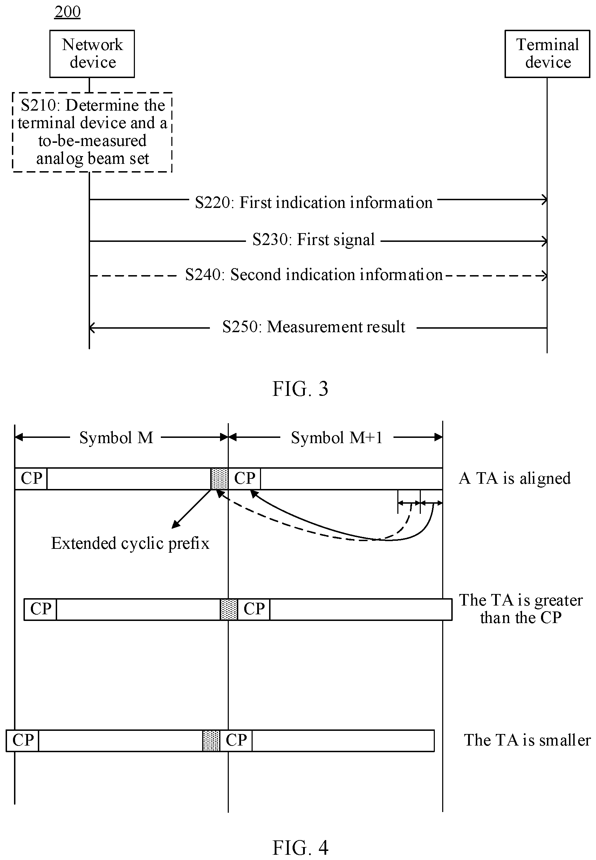

FIG. 3 is an interaction flowchart of an interference measurement method according to an embodiment of this application. The method 200 shown in FIG. 3 includes the following steps. Step S220: A network device sends first indication information to a terminal device. The first indication information indicates the terminal device to measure signal quality of a first signal. Correspondingly, the terminal device receives the first indication information.

It should be understood that the first signal is a signal sent by using an analog beam. The first signal mentioned in this embodiment of this application may be CSI. Certainly, the first signal may alternatively be another signal used to measure interference. This is not limited in this application. Optionally, the terminal device meets a second preset condition. The second preset condition includes at least one of the following:

a scheduling data amount of the terminal device is greater than or equal to a first threshold; signal quality for communication between the terminal device and the network device is greater than or equal to a second threshold; and a distance between geographical locations of the terminal device and the network device is less than or equal to a threshold.

In a possible implementation, the network device sends the first indication information to the terminal device that meets the second preset condition, to indicate to measure the signal quality of the first signal. Correspondingly, the terminal device that meets the second preset condition receives the first indication information.

The network device may select, within a coverage area of the network device by using this solution, some terminal devices that meet the second preset condition, to perform measurement, to reduce measurement overheads.

Step S230: The network device sends the first signal to the terminal device by using N analog beams. N is an integer greater than or equal to 1, and the analog beam meets a first preset condition. Correspondingly, the terminal device receives the first signal.

In a possible implementation, the network device sends, by using the N analog beams, the first signal to the terminal device that meets the second preset condition. Correspondingly, the terminal device that meets the second preset condition receives the first signal.

Optionally, that the analog beam meets the first preset condition includes at least one of the following:

signal quality of a signal transmitted by using the analog beam is greater than or equal to a third threshold; and the analog beam is a serving beam of the terminal device, and the terminal device may be the terminal device that meets the second preset condition.

The network device may select, from the analog beams on a network device side by using this solution, some analog beams that meet the first preset condition as to-be-measured analog beams. This avoids excessive analog beam combinations on which interference measurement is to be performed, and further reduces the measurement overheads.

Optionally, the network device simultaneously sends the first signal to the terminal device by using the N analog beams, or the network device periodically sends the first signal to the terminal device by using the N analog beams (to be specific, the network device periodically sends the first signal on different time domain resources for N times, sends the first signal by using one analog beam each time, and sends the first signal by using N different analog beams for N times), or the network device aperiodically sends the first signal to the terminal device by using the N analog beams (to be specific, the network device aperiodically sends the first signal on different time domain resources for N times, sends the first signal by using one analog beam each time, and sends the first signal by using N different analog beams for N times).

For example, after the terminal device accesses the network device, a receive beam of the terminal device is determined based on a location of the analog beam at which the network device sends a synchronization signal block (synchronization signal block, SSB) and that is obtained by the terminal device through measuring. The network device sends the first signal by using the N analog beams in a time domain location corresponding to the analog beam at which the network device sends the SSB, specifically, may simultaneously send the first signal by using the N analog beams, or may periodically send the first signal by using the N analog beams (same as described above, the network device sends the first signal by using one analog beam each time, and sends the first signal by using N different analog beams for N times), or aperiodically sends the first signal by using the N analog beams (same as described above, the network device sends the first signal by using one analog beam each time, and sends the first signal by using N different analog beams for N times). The terminal device receives the first signal based on the determined location of the receive beam, and performs the measurement.

Optionally, a value of N is 4. This slightly modifies an existing protocol.

Optionally, that the network device sends the first signal to the terminal device by using the N analog beams includes the following steps.

The network device repeatedly sends the first signal on a plurality of symbols by using the N analog beams. It should be understood that the symbol may be an orthogonal frequency division multiplexing (orthogonal frequency division multiplexing, OFDM) symbol. This is not limited in this application.

In a possible implementation, the plurality of symbols include a first symbol and a second symbol. The first symbol includes an extended cyclic prefix of the second symbol. The first symbol and the second symbol are adjacent.

In another possible implementation, the plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

Optionally, the method 200 further includes the following steps.

Step S240: The network device sends second indication information to the terminal device. The second indication information indicates the terminal device to measure the signal quality of the first signal carried on the second symbol. Correspondingly, the terminal device receives the second indication information, and measures the signal quality of the first signal carried on the second symbol.

In the implementation in which the plurality of symbols include the first symbol and the second symbol, a measurement symbol is the second symbol. To be specific, the network device indicates, by using the second indication information, the terminal device to measure the signal quality of the first signal carried on the second symbol. In this implementation, the first symbol includes the extended cyclic prefix (or an extended cyclic prefix) of the second symbol, that is, content carried by some bits at a back end of the second symbol is sent as the extended cyclic prefix in the first symbol through a cyclic shift. It is equivalent to increasing a length of a cyclic prefix (cyclic prefix, CP). It should be understood that content included in the extended cyclic prefix and the cyclic prefix does not overlap.

For example, as shown in FIG. 4, the network device sends the first signal on a symbol M (the first symbol) and a symbol M+1 (the second symbol). Aback end of the symbol M includes an extended cyclic prefix of the symbol M+1. Content replicated by the extended cyclic prefix is content carried by some bits at a back end of the symbol M+ 1. The content replicated by the extended cyclic prefix does not include content that is carried by some bits at the back end of the symbol M+1 and that is replicated by a cyclic prefix included in the symbol M+1. The network device indicates the terminal device to measure the signal quality of the first signal carried on the symbol M+1. M is an integer greater than or equal to 0. FIG. 4 shows specific situations in which two consecutive symbols carry the first signal when a TA is aligned, the TA is greater than the CP, and the TA is smaller. It can be concluded that, that the first signal is sent by using two consecutive symbols can avoid inaccurate measurement caused because the first signal is not completely received when the timing advance (timing advance, TA) is greater than the CP. However, when the TA is smaller, the terminal device receives, in advance, the first signal carried on the second symbol, and a blank occurs at an end of the second symbol. This also affects measurement accuracy of the first signal. In the implementation in which the plurality of symbols include the third symbol, the fourth symbol, and the fifth symbol, the measurement symbol is an intermediate symbol, that is, the fourth symbol. To be specific, the network device indicates, by using the second indication information, the terminal device to measure the signal quality of the first signal carried on the fourth symbol. In this implementation, the third symbol and/or the fifth symbol include/includes an extended cyclic prefix of the fourth symbol, that is, content carried by some bits at a back end of the fourth symbol is sent in the third symbol and/or the fifth symbol as the extended cyclic prefix through a cyclic shift. It should be understood that content included in the extended cyclic prefix and a cyclic prefix does not overlap.

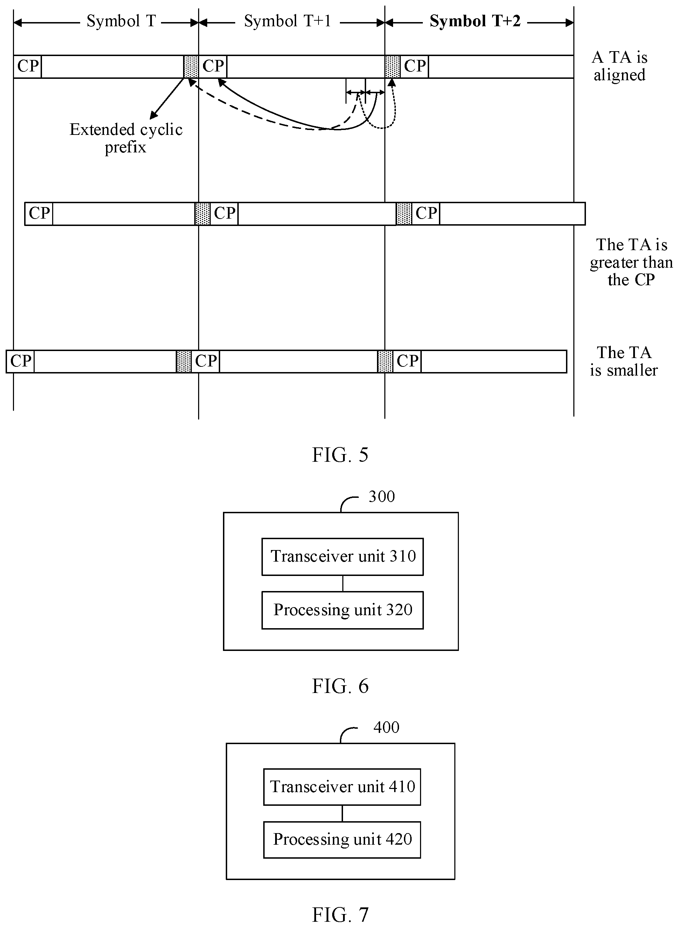

For example, as shown in FIG. 5, the network device sends the first signal on a symbol T (the third symbol), a symbol T+1 (the fourth symbol), and a symbol T+2 (the fifth symbol). A back end of the symbol T includes an extended cyclic prefix of the symbol T+1. Content replicated by the extended cyclic prefix is content carried by some bits at a back end of the symbol T+1. The content replicated by the extended cyclic prefix does not include content that is carried by some bits at the back end of the symbol T + 1 and that is replicated by a cyclic prefix included in the symbol T+1. A front end of the symbol T+2 includes the extended cyclic prefix of the symbol T+1. The content replicated by the extended cyclic prefix is the content carried by some bits at the back end of the symbol T+1. The content replicated by the extended cyclic prefix does not include the content that is carried by some bits at the back end of the symbol T+1 and that is replicated by the cyclic prefix included in the symbol T+1. The network device indicates the terminal device to measure the signal quality of the first signal carried on the symbol T+1. T is an integer greater than or equal to 0. FIG. 5 shows specific situations in which three consecutive symbols carry the first signal when a TA is aligned, the TA is greater than the CP, and the TA is smaller. It can be concluded that, that the first signal is sent by using three consecutive symbols can avoid inaccurate measurement caused because the first signal is not completely received when the TA is greater than the CP, or can avoid inaccurate measurement caused because the terminal device receives, in advance when the TA is smaller, the first signal carried on the intermediate symbol (where a blank occurs at an end of the intermediate symbol).

It should be understood that the foregoing solution is applicable when the terminal device is in a not line of sight (not line of sight, NLOS) transmission environment.

The foregoing implementation in which the first signal is sent by using the plurality of symbols can avoid the problem caused because the first signal is not completely received when the timing advance (Timing advance, TA) is greater than the CP, or when the TA is smaller (where the blank occurs at the end of the intermediate symbol). This helps the terminal device measure the first signal more accurately, so that the network device calculates interference between analog beams based on an accurate measurement result.

Optionally, before step S220, the method 200 includes the following steps.

Step S210: The network device determines the terminal device and/or a to-be-measured analog beam set.

Optionally, the network device determines the to-be-measured analog beam set by using the first preset condition. The N analog beams belong to the to-be-measured analog beam set. The network device determines the terminal device based on the second preset condition. There may be one or more terminal devices.

In other words, there may be one or more terminal devices in the foregoing steps S220, S230, and S240, and the following step S250. The one or more terminal devices are determined by the network device based on the second preset condition.

For example, step S220 may be replaced with: The network device sends the first indication information to the one or more terminal devices. The first indication information indicates the terminal device to measure the signal quality of the first signal. Correspondingly, the one or more terminal devices receive the first indication information. Step S230 may be replaced with: The network device sends the first signal to the one or more terminal devices by using the N analog beams. N is an integer greater than or equal to 1, and the analog beam meets the first preset condition. Correspondingly, the one or more terminal devices receive the first signal. Step S240 may be replaced with: The network device sends the second indication information to the one or more terminal devices. The second indication information indicates the terminal device to measure the signal quality of the first signal carried on the second symbol. Correspondingly, the one or more terminal devices receive the second indication information, and measures the signal quality of the first signal carried on the second symbol. Step S250 may be replaced with: The one or more terminal devices send a measurement result to the network device. The measurement result is the signal quality of the first signal. Correspondingly, the network device receives the measurement result.

Step S250: The terminal device sends the measurement result to the network device. The measurement result is the signal quality of the first signal. Correspondingly, the network device receives the measurement result.

Optionally, the measurement result includes reference signal received power (reference signal received power, RSRP) of the first signal.

In a possible implementation, after receiving the measurement result from the terminal device, the network device subsequently sends the first signal by using the N analog beams in a corresponding time domain location. A sending manner is the same as that described above. The sending manner may be simultaneous sending, or may be periodic or aperiodic sending in sequence. The sending ends until all analog beams in the to-be-measured analog beam set are measured.

Subsequently, the network device may calculate interference between corresponding analog beams based on measurement results that are of all analog beams in the to-be-measured analog beam set and that are reported by the terminal device, or the network device combines the analog beams to calculate isolation for user pairing. The isolation is an interference suppression measure to reduce impact of various interference on a receiver as much as possible. Generally, there are two measures. One is to increase space isolation, to be specific, to increase a space distance or avoid facing to an interference source in a direction. The other is to add a filter at a transmit end or add a metal isolation net in a direction from which the interference comes at a receive end.

The solution provided in this application is triggered by the network device. The solution does not depend on a capability of measuring the SINR by the terminal device when the network device sends the downlink signal by using the plurality of analog beams. In other words, the solution is compatible with the terminal device in Release 15, and whether the SINR meets a specific condition is calculated in a combining manner on the network device side based on the measurement result reported by the terminal device, or an interference magnitude is calculated. This can greatly reduce the measurement overheads.

It should be understood that the method provided in this application may be applied to a case in which the network device having an analog beam design measures and estimates, when the network device cannot obtain a complete spatial channel of the terminal device, interference during multi-user pairing when sending the downlink signal by using the analog beam. The method provided in this application may be further applied to calculation and derivation of interference between uplink signals. In specific application, the foregoing signal, the analog beam, and the specific implementation may be changed based on a specific scenario.

It should be further understood that the method provided in this application may be further applied to interference measurement between a plurality of network devices. For example, adjacent network devices obtain RSRP of an analog beam in the to-be-measured analog beam set of each other (where the RSRP of the analog beam may be understood as RSRP that is reported by the terminal device and that is of a downlink signal sent by the network device by using the analog beam), so that interference information between the adjacent network devices may be obtained. It should be understood that the dashed-line steps in the foregoing flowcharts are optional steps, and a sequence of the steps is determined according to internal logic of the method. Sequence numbers shown in the figures are merely examples, and do not constitute a limitation of a sequence of the steps in this application.

It should be further understood that the methods provided in embodiments of this application may be used independently, or may be used together. This is not limited in this application.

It should be noted that the execution body shown in FIG. 3 is merely an example, and the execution body may alternatively be a chip, a chip system, or a processor that supports the execution body in implementing the methods shown in FIG. 3. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the terminal device may alternatively be implemented by a component (for example, a chip or a circuit) that can be used on the terminal device, and methods and operations implemented by the network device may alternatively be implemented by a component (for example, a chip or a circuit) that can be used on the network device.

The foregoing mainly describes the solutions provided in embodiments of this application from a perspective of interaction between network elements. It may be understood that, to implement the foregoing functions, each network element like a transmitting device or a receiving device includes a corresponding hardware structure and/or software module for performing each function. A person skilled in the art may be aware that, with reference to units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application. In embodiments of this application, the transmitting device or the receiving device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 6 is a schematic block diagram of a communication apparatus according to an embodiment of this application. The communication apparatus 300 includes a transceiver unit 310 and a processing unit 320. The transceiver unit 310 may communicate with the outside, and the processing unit 320 is configured to perform data processing. The transceiver unit 310 may also be referred to as a communication interface or a communication unit.

Optionally, the communication apparatus 300 may further include a storage unit. The storage unit may be configured to store instructions and/or data. The processing unit 320 may read the instructions and/or the data in the storage unit.

In a case, the communication apparatus 300 may be a network device. The transceiver unit 310 is configured to perform a receiving or sending operation of the network device in the foregoing method embodiment. The processing unit 320 is configured to perform an internal processing operation of the network device in the foregoing method embodiment.

In another case, the communication apparatus 300 may be a device including the network device. Alternatively, the communication apparatus 300 may be a component configured in the network device, for example, a chip in the network device. In this way, the transceiver unit 310 may be an interface circuit, a pin, or the like. Specifically, the interface circuit may include an input circuit and an output circuit, and the processing unit 320 may include a processing circuit.

In a possible implementation, the transceiver unit 310 is configured to send first indication information to a terminal device. The first indication information indicates the terminal device to measure signal quality of a first signal. The transceiver unit 310 is further configured to send the first signal to the terminal device by using N analog beams. N is an integer greater than or equal to 1, and the analog beam meets a first preset condition. The transceiver unit 310 is further configured to receive a measurement result from the terminal device. The measurement result is the signal quality of the first signal.

Based on the foregoing solution, the network device selects an analog beam that meets a preset condition to send the first signal, so that the network device does not calculate interference between all analog beams on a network device side when calculating the interference, to reduce measurement overheads.

In a possible implementation, the terminal device meets a second preset condition, and the second preset condition includes at least one of the following: a scheduling data amount of the terminal device is greater than or equal to a first threshold; and signal quality for communication between the terminal device and the network device is greater than or equal to a second threshold.

Based on the foregoing solution, the network device determines, by using the scheduling data amount of the terminal device, and/or the signal quality for the communication with the network device, a terminal device that participates in the measurement. This avoids a case in which all terminal devices within a coverage area of the network device participate in the measurement, and can further reduce measurement overheads.

In a possible implementation, that the analog beam meets a first preset condition includes at least one of the following: signal quality of a signal transmitted by using the analog beam is greater than or equal to a third threshold; and the analog beam is a serving beam that is of the terminal device and that meets the second preset condition.

In a possible implementation, the processing unit 320 is configured to determine the terminal device and/or a to-be-measured analog beam set. The N analog beams belong to the to-be-measured analog beam set.

Based on the foregoing solution, before measuring interference, the network device may determine the terminal device that participates in the measurement and the to-be-measured analog beam set, and send the first signal to the determined terminal device by using the analog beam in the to-be-measured analog beam set until measurement of all analog beams in the to-be-measured analog beam set is completed. Then, the network device may calculate interference between analog beams for user pairing.

In a possible implementation, the transceiver unit 310 is specifically configured to repeatedly send the first signal to the terminal device on a plurality of symbols by using the N analog beams. The plurality of symbols include a first symbol and a second symbol. The first symbol includes an extended cyclic prefix of the second symbol. The first symbol and the second symbol are adjacent. In a possible implementation, the transceiver unit 310 is specifically configured to repeatedly send the first signal to the terminal device on a plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

In a possible implementation, the transceiver unit 310 is further configured to send second indication information to the terminal device. The second indication information indicates the terminal device to measure the signal quality of the first signal carried on the second symbol or the fourth symbol.

Based on the foregoing solution, the network device repeatedly sends the first signal by using two symbols, and indicates the terminal device to measure the signal quality of the first signal carried on a later symbol. This can avoid inaccurate measurement caused because the first signal is not completely received when timing advance is greater than a cyclic prefix. The network device repeatedly sends the first signal by using three symbols, and indicates the terminal device to measure the signal quality of the first signal carried on an intermediate symbol. This can avoid inaccurate measurement caused because the first signal is not completely received when the timing advance is greater than the cyclic prefix, or when the timing advance is smaller (where a blank occurs at an end of the intermediate symbol).

In a possible implementation, the measurement result includes reference signal received power.

Based on the foregoing solution, the network device triggers the terminal device to measure reference signal received power of the first signal, so that the network device calculates interference between analog beams after receiving the measurement result. Compared with a current solution in which the terminal device measures and calculates the interference, this solution does not completely depend on a capability of calculating the interference by the terminal device, and can be compatible with the terminal device in Release 15.

FIG. 7 is a schematic block diagram of a communication apparatus according to an embodiment of this application. The communication apparatus 400 includes a transceiver unit 410 and a processing unit 420. The transceiver unit 410 may communicate with the outside, and the processing unit 420 is configured to perform data processing. The transceiver unit 410 may also be referred to as a communication interface or a communication unit.

Optionally, the communication apparatus 400 may further include a storage unit. The storage unit may be configured to store instructions and/or data. The processing unit 420 may read the instructions and/or the data in the storage unit.

In a case, the communication apparatus 400 may be a terminal device. The transceiver unit 410 is configured to perform a receiving or sending operation of the terminal device in the foregoing method embodiment. The processing unit 420 is configured to perform an internal processing operation of the terminal device in the foregoing method embodiment.

In another case, the communication apparatus 400 may be a device including the terminal device. Alternatively, the communication apparatus 400 may be a component configured in the terminal device, for example, a chip in the terminal device. In this way, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to receive first indication information from a network device. The first indication information indicates the terminal device to measure signal quality of a first signal. The transceiver unit 410 is further configured to receive the first signal sent by the network device by using N analog beams. N is an integer greater than or equal to 1, and the analog beam meets a first preset condition. The transceiver unit 410 is further configured to send a measurement result to the network device. The measurement result is the signal quality of the first signal.

Based on the foregoing solution, the network device selects an analog beam that meets a preset condition to send the first signal, so that the terminal device does not need to measure first signals sent by using all analog beams on a network device side during measurement, to reduce measurement overheads.

In a possible implementation, the apparatus meets a second preset condition, and the second preset condition includes at least one of the following: a scheduling data amount of the apparatus is greater than or equal to a first threshold; and signal quality for communication between the apparatus and the network device is greater than or equal to a second threshold.

Based on the foregoing solution, the terminal device participates in the measurement only when the scheduling data amount of the terminal device and/or the signal quality for the communication with the network device meet the second preset condition. This avoids a case in which all terminal devices within a coverage area of the network device participate in the measurement, and can further reduce measurement overheads.

In a possible implementation, that the analog beam meets the first preset condition includes at least one of the following: signal quality of a signal transmitted by using the analog beam is greater than or equal to a third threshold; and the analog beam is a serving beam that is of the terminal device and that meets the second preset condition.

In a possible implementation, the transceiver unit 410 is further configured to receive the first signal repeatedly sent by the network device on a plurality of symbols by using the N analog beams. The plurality of symbols include a first symbol and a second symbol. The first symbol includes an extended cyclic prefix of the second symbol. The first symbol and the second symbol are adjacent. In a possible implementation, the transceiver unit 410 is further configured to receive the first signal repeatedly sent by the network device on the plurality of symbols by using the N analog beams. The plurality of symbols include a third symbol, a fourth symbol, and a fifth symbol. The third symbol and/or the fifth symbol include/includes an extended cyclic prefix of the fourth symbol. The fourth symbol is located between the third symbol and the fifth symbol. The third symbol, the fourth symbol and the fifth symbol are adjacent.

In a possible implementation, the transceiver unit 410 is further configured to receive second indication information from the network device. The second indication information indicates the terminal device to measure the signal quality of the first signal carried on the second symbol or the fourth symbol.

Based on the foregoing solution, the terminal device receives the first signal by using two symbols, and measures the signal quality of the first signal carried on a later symbol. This can avoid inaccurate measurement caused because the first signal is not completely received when timing advance is greater than a cyclic prefix. The terminal device receives the first signal by using three symbols, and measures the signal quality of the first signal carried on an intermediate symbol. This can avoid the inaccurate measurement caused because the first signal is not completely received when the timing advance is greater than the cyclic prefix, or when the timing advance is smaller (where a blank occurs at an end of the intermediate symbol).

In a possible implementation, the measurement result includes reference signal received power.

Based on the foregoing solution, the terminal device reports reference signal received power of the first signal (for example, CSI), and does not participate in interference calculation. Compared with a current solution in which the terminal device measures and calculates the interference, this solution does not completely depend on a capability of calculating the interference by the terminal device, and can be compatible with the terminal device in Release 15.

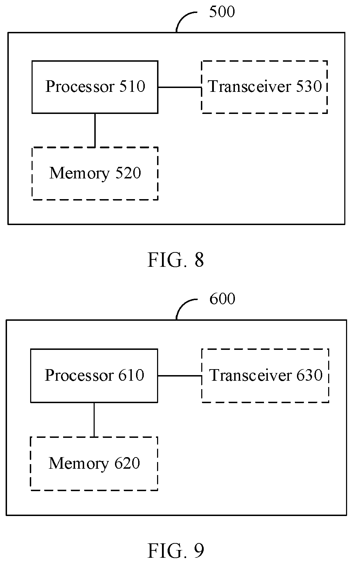

As shown in FIG. 8, an embodiment of this application further provides a communication apparatus 500. The communication apparatus 500 includes a processor 510. The processor 510 is coupled to a memory 520. The memory 520 is configured to store a computer program or instructions or data. The processor 510 is configured to perform the computer program or the instructions and/or the data stored in the memory 520, so that the method in the foregoing method embodiments is performed.

Optionally, the communication apparatus 500 includes one or more processors 510.

Optionally, as shown in FIG. 8, the communication apparatus 500 may further include the memory 520.

Optionally, the communication apparatus 500 may include one or more memories 520.

Optionally, the memory 520 may be integrated with the processor 510, or may be disposed separately.

Optionally, as shown in FIG. 8, the communication apparatus 500 may further include a transceiver 530 and/or a communication interface. The transceiver 530 and/or the communication interface are/is configured to receive and/or send a signal. For example, the processor 510 is configured to control the transceiver 530 to receive and/or send the signal.

In a solution, the communication apparatus 500 is configured to implement an operation performed by the network device in the foregoing method embodiments.

For example, the processor 510 is configured to implement an operation performed internally by the network device in the foregoing method embodiments, and the transceiver 530 is configured to implement a receiving or sending operation performed by the network device in the foregoing method embodiments. The processing unit 320 in the apparatus 300 may be the processor in FIG. 8, and the transceiver unit 310 may be the transceiver and/or the communication interface in FIG. 8. For specific operations performed by the processor 510, refer to the foregoing descriptions of the processing unit 320. For operations performed by the transceiver 530, refer to the descriptions of the transceiver unit 310. Details are not described herein again.

As shown in FIG. 9, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to perform the computer program or the instructions and/or the data stored in the memory 620, so that the method in the foregoing method embodiments is performed.

Optionally, the communication apparatus 600 includes one or more processors 610.

Optionally, as shown in FIG. 9, the communication apparatus 600 may further include the memory 620.

Optionally, the communication apparatus 600 may include one or more memories 620.

Optionally, the memory 620 may be integrated with the processor 610, or may be disposed separately.

Optionally, as shown in FIG. 9, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal. In a solution, the communication apparatus 600 is configured to implement an operation performed by the terminal device in the foregoing method embodiments. For example, the processor 610 is configured to implement an operation performed internally by the terminal device in the foregoing method embodiments, and the transceiver 630 is configured to implement a receiving or sending operation performed by the terminal device in the foregoing method embodiments. The processing unit 420 in the apparatus 400 may be the processor in FIG. 9, and the transceiver unit 410 may be the transceiver in FIG. 9. For specific operations performed by the processor 610, refer to the foregoing descriptions of the processing unit 420. For operations performed by the transceiver 630, refer to the descriptions of the transceiver unit 410. Details are not described herein again.

According to the method provided in embodiments of this application, this application further provides a computer-readable medium, and the computer-readable medium stores program code. When the program code is run on a computer, the computer is enabled to perform the method in the embodiment shown in FIG. 3. For example, when a computer program is executed by a computer, the computer is enabled to implement the method performed by the network device or the method performed by the terminal device in the foregoing method embodiments.

Embodiments of this application further provides a computer program product including instructions. When the instructions are executed by a computer, the computer is enabled to implement the method performed by the network device or the method performed by the terminal device in the foregoing method embodiments.

Embodiments of this application further provide a communication system. The communication system includes the network device and the terminal device in the foregoing embodiments.

For explanations and beneficial effects of related content in any communication apparatus provided above, refer to the foregoing corresponding method embodiments. Details are not described herein again.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device such as a server or a data center that integrates one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

The network device and the terminal device in the foregoing apparatus embodiments correspond to the network device and the terminal device in the method embodiments, and corresponding modules or units perform corresponding steps. For example, a communication unit (the transceiver) performs receiving or sending steps in the method embodiments. Other steps other than sending and receiving may be performed by a processing unit (the processor). For a function of a specific unit, refer to the corresponding method embodiments. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

A person of ordinary skill in the art may be aware that, with reference to units and algorithm steps of the examples described in embodiments disclosed in this specification, this application can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interference measurement method, comprising:

   sending, by a network device, first indication information to a terminal device, wherein the first indication information indicates the terminal device to measure signal quality of a first signal;
   sending, by the network device, the first signal to the terminal device by using N analog beams, wherein N is an integer greater than or equal to 1, and the analog beam meets a first preset condition; and
   receiving, by the network device, a measurement result from the terminal device, wherein the measurement result is the signal quality of the first signal.

2. The method according to claim 1, wherein the terminal device meets a second preset condition, and the second preset condition comprises at least one of the following:

   a scheduling data amount of the terminal device is greater than or equal to a first threshold; and signal quality for communication between the terminal device and the network device is greater than or equal to a second threshold.

3. The method according to claim 1 or 2, wherein that the analog beam meets a first preset condition comprises at least one of the following:

signal quality of a signal transmitted by using the analog beam is greater than or equal to a third threshold; and
the analog beam is a serving beam of the terminal device.

4. The method according to any one of claims 1 to 3, wherein the method further comprises:
determining, by the network device, the terminal device and/or a to-be-measured analog beam set, wherein the N analog beams belong to the to-be-measured analog beam set.

5. The method according to any one of claims 1 to 4, wherein the sending, by the network device, the first signal to the terminal device by using N analog beams comprises:

repeatedly sending, by the network device, the first signal to the terminal device on a plurality of symbols by using the N analog beams, wherein
the plurality of symbols comprise a first symbol and a second symbol, the first symbol comprises an extended cyclic prefix of the second symbol, and the first symbol and the second symbol are adjacent; or
the plurality of symbols comprise a third symbol, a fourth symbol, and a fifth symbol, the third symbol and/or the fifth symbol comprise/comprises an extended cyclic prefix of the fourth symbol, the fourth symbol is located between the third symbol and the fifth symbol, and the third symbol, the fourth symbol and the fifth symbol are adjacent; and
the method further comprises:
sending, by the network device, second indication information to the terminal device, wherein the second indication information indicates the terminal device to measure the signal quality of the first signal carried on the second symbol or the fourth symbol.

6. The method according to any one of claims 1 to 5, wherein the measurement result comprises reference signal received power.

7. An interference measurement method, comprising:

receiving, by a terminal device, first indication information from a network device, wherein the first indication information indicates the terminal device to measure signal quality of a first signal;
receiving, by the terminal device, the first signal sent by the network device by using N analog beams, wherein N is an integer greater than or equal to 1, and the analog beam meets a first preset condition; and
sending, by the terminal device, a measurement result to the network device, wherein the measurement result is the signal quality of the first signal.

8. The method according to claim 7, wherein the terminal device meets a second preset condition, and the second preset condition comprises at least one of the following:

a scheduling data amount of the terminal device is greater than or equal to a first threshold; and
signal quality for communication between the terminal device and the network device is greater than or equal to a second threshold.

9. The method according to claim 7 or 8, wherein that the analog beam meets a first preset condition comprises at least one of the following:

signal quality of a signal transmitted by using the analog beam is greater than or equal to a third threshold; and
the analog beam is a serving beam of the terminal device.

10. The method according to any one of claims 7 to 9, wherein the receiving, by the terminal device, the first signal sent by the network device by using N analog beams comprises:

receiving, by the terminal device, the first signal repeatedly sent by the network device on a plurality of symbols by using the N analog beams, wherein
the plurality of symbols comprise a first symbol and a second symbol, the first symbol comprises an extended cyclic prefix of the second symbol, and the first symbol and the second symbol are adjacent; or
the plurality of symbols comprise a third symbol, a fourth symbol, and a fifth symbol, the third symbol and/or the fifth symbol comprise/comprises an extended cyclic prefix of the fourth symbol, the fourth symbol is located between the third symbol and the fifth symbol, and the third symbol, the fourth symbol and the fifth symbol are adjacent; and
the method further comprises:

receiving, by the terminal device, second indication information from the network device, wherein the second indication information indicates the terminal device to measure the signal quality of the first signal carried on the second symbol or the fourth symbol.

11. The method according to any one of claims 7 to 10, wherein the measurement result comprises reference signal received power.

12. A communication apparatus, comprising a module configured to perform the method according to any one of claims 1 to 6.

13. A communication apparatus, comprising a processor and a memory, wherein the memory is configured to store one or more computer programs, and when the one or more computer programs are run, the method according to any one of claims 1 to 6 is performed.

14. A communication apparatus, comprising a module configured to perform the method according to any one of claims 7 to 11.

15. A communication apparatus, comprising a processor and a memory, wherein the memory is configured to store one or more computer programs, and when the one or more computer programs are run, the method according to any one of claims 7 to 11 is performed.

16. A communication system, comprising the communication apparatus according to claim 12 or 13, and the communication apparatus according to claim 14 or 15.

17. A computer-readable storage medium, wherein the computer-readable storage medium is configured to store a computer program, and when the computer program runs on a computer, the computer is enabled to perform the method according to any one of claims 1 to 6, or the computer is enabled to perform the method according to any one of claims 7 to 11.

18. A computer program product, wherein the computer program product comprises computer program code, and when the computer program code is run, the method according to any one of claims 1 to 6 is performed, or the method according to any one of claims 7 to 11 is performed.

FIG. 1

FIG. 2

200

```
┌──────────┐                                    ┌──────────┐
│ Network  │                                    │ Terminal │
│ device   │                                    │ device   │
└────┬─────┘                                    └────┬─────┘
```

S210: Determine the terminal device and a to-be-measured analog beam set

S220: First indication information

S230: First signal

S240: Second indication information

S250: Measurement result

FIG. 3

Symbol M ⟷ Symbol M+1

CP ▨ CP — A TA is aligned

Extended cyclic prefix

CP ▨ CP — The TA is greater than the CP

CP ▨ CP — The TA is smaller

FIG. 4

FIG. 5

FIG. 6

FIG. 7

500

| Processor 510 | — | Transceiver 530 |

| Memory 520 |

FIG. 8

600

| Processor 610 | — | Transceiver 630 |

| Memory 620 |

FIG. 9

## INTERNATIONAL SEARCH REPORT

| International application No. |
|---|
| **PCT/CN2022/111997** |

**A. CLASSIFICATION OF SUBJECT MATTER**

H04W 16/28(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 波束, 模拟波束, 多用户, 多入多出, 服务波束, 干扰, 波束成型, 波束赋形, 信道状态信息, 信号质量, 接收功率, 测量, 参考信号, 测量信号, 测试, 报告, CSI, RS, RSRP, SINR, service, beam, MU-MIMO, MU MIMO, measure, report, reference signal, interference, HBF, hybrid, beamform

**C. DOCUMENTS CONSIDERED TO BE RELEVANT**

| Category* | Citation of document, with indication, where appropriate, of the relevant passages | Relevant to claim No. |
|---|---|---|
| X | CN 111510946 A (CHENGDU HUAWEI TECHNOLOGIES CO., LTD.) 07 August 2020 (2020-08-07)<br>    description, paragraphs 0003-0075 and 0086-0302 | 1-18 |
| A | CN 110958636 A (VIVO COMMUNICATION TECHNOLOGY CO., LTD.) 03 April 2020 (2020-04-03)<br>    entire document | 1-18 |
| A | CN 111432427 A (CHINA MOBILE COMMUNICATION LTD., RESEARCH INSTITUTE et al.) 17 July 2020 (2020-07-17)<br>    entire document | 1-18 |
| A | US 2018212658 A1 (TELEFONAKTIEBOLAGET LM ERICSSON (PUBL)) 26 July 2018 (2018-07-26)<br>    entire document | 1-18 |
| A | APPLE. "R17 MIMO enhancements"<br>*3GPP TSG RAN Meeting #85 RP-192174*, 20 September 2019 (2019-09-20),<br>    entire document | 1-18 |

☑ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2022** | **25 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/111997**

**C.    DOCUMENTS CONSIDERED TO BE RELEVANT**

| Category* | Citation of document, with indication, where appropriate, of the relevant passages | Relevant to claim No. |
|---|---|---|
| A | US 2018062722 A1 (CHINA ACADEMY OF TELECOMMUNICATIONS TECHNOLOGY) 01 March 2018 (2018-03-01) entire document | 1-18 |

Form PCT/ISA/210 (second sheet) (January 2015)

**INTERNATIONAL SEARCH REPORT**
**Information on patent family members**

International application No.

**PCT/CN2022/111997**

| Patent document cited in search report | | | Publication date (day/month/year) | Patent family member(s) | | | Publication date (day/month/year) |
|---|---|---|---|---|---|---|---|
| CN | 111510946 | A | 07 August 2020 | WO | 2020155604 | A1 | 06 August 2020 |
| CN | 110958636 | A | 03 April 2020 | KR | 20210060568 | A | 26 May 2021 |
| | | | | EP | 3860197 | A1 | 04 August 2021 |
| | | | | WO | 2020063215 | A1 | 02 April 2020 |
| | | | | SG | 11202103182 U | A | 29 April 2021 |
| | | | | JP | 2022501950 | A | 06 January 2022 |
| | | | | US | 2021218540 | A1 | 15 July 2021 |
| CN | 111432427 | A | 17 July 2020 | | None | | |
| US | 2018212658 | A1 | 26 July 2018 | WO | 2017063614 | A2 | 20 April 2017 |
| | | | | EP | 3231101 | A2 | 18 October 2017 |
| | | | | CN | 110024303 | A | 16 July 2019 |
| US | 2018062722 | A1 | 01 March 2018 | WO | 2016141782 | A1 | 15 September 2016 |
| | | | | CN | 106033989 | A | 19 October 2016 |
| | | | | TW | 201633737 | A | 16 September 2016 |
| | | | | EP | 3270524 | A1 | 17 January 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111012315